Europäisches Patentamt

**European Patent Office**

**Office européen des brevets**

(19)

(11) Publication number: **0 102 424**

**A1**

# (12) EUROPEAN PATENT APPLICATION

(21) Application number: **82304640.4**

(22) Date of filing: **03.09.82**

(51) Int. Cl.³: **B 63 B 1/38**

(43) Date of publication of application:
**14.03.84 Bulletin 84/11**

(84) Designated Contracting States:
**AT BE DE FR GB IT NL SE**

(71) Applicant: **Burg, Donald E.**
**15840 S.W. 84th Avenue**
**Miami Florida 33157(US)**

(72) Inventor: **Burg, Donald E.**
**15840 S.W. 84th Avenue**
**Miami Florida 33157(US)**

(74) Representative: **Newby, Martin John et al,**
**J.Y. & G.W. Johnson Furnival House 14-18 High Holborn**
**London WC1V 6DE(GB)**

(54) **A boat hull.**

(57) Hull (14) for a marine surface vessel with one or more recesses (52) that intersect the hull (14) substantially beneath the waterline thereof, the recess being bounded by stabilizing, load-carrying, catamaran-like sidehulls (50, 51) with bow-shaped members (49, 41, 39, 40) located at its forward and aft portions and optionally therebetween, with the recess (52) being supplied with pressurized gas to maintain a lift-augmenting, restrained pressurized gas layer under the hull.

The fore and aft bow-shaped members (49, 41), and any optional intermediate bow-shaped members (39, 40), contact the water like small bow sections.

Preferably the sidehull keels (50, 51) diverge rearwardly.

*Fig. 2*

EP 0 102 424 A1

- 1 -

## A boat hull

This invention relates to a boat hull of the kind including a recess in an underside of the hull, at least one bow-shaped member proximal to a forward portion of the recess, gas inlet means for supplying the recess with pressurised gas from a powered gas supply source and substantially rigid aft gas sealing means extending over a major portion of the recess width.

A boat hull of the kind referred to is described in my US-A-4,165,703. However even before this patent the idea of introducing air or other gases at ambient or higher pressures under boat hulls was known in basic concept and earlier patents have been issued on several approaches. Only a few of the more sophisticated developments have met with any commercial success. However, due to their complex-structural requirements and elaborate flexible seals they remain too expensive or impractical for general marine applications. The only example of the latter that has any applicability here is the Surface Effect Ship (SES) as it is known in the United States of America. The SES is an outgrowth of the success of the Ground Effect Machine (GEM) as first made workable by Christopher Cockerell over two decades ago in Britain. The GEM is totally supported by an air cushion and has seals around its full periphery. As such it is truly amphibious and has little relationship to this invention.

The SES is a substantially rectangular shaped platform with widely spaced, deep vertical side members that extend downward from the main platform. The side members are connected fore and aft by flexible seals or flaps, and the deep wave clearing chamber thus defined is pressurized with air. The SES requires substantially less chamber air flow and therefore less fan power than the GEM but is limited to a marine environment. The SES is capable of very high speeds, offers a smoother ride than conventional craft due to proportionally thin side members and the flexibility of the seals, and is significantly more efficient than conventional craft due to the minimum wetted area. The SES offers much potential as a military and commercial craft notwithstanding its high initial costs, deep static draft due to the vertical side members, inherently high stress structure and high maintenance flexible seals. The U.S. Navy has extensively tested SES prototypes including two 100 ton craft and is presently working on designs of SES's of 3000 tons and more. Also, recent commercial SES ventures appear promising but are reported to be several times as expensive as equivalent size conventional hulls.

Some patents related to the SES and some of its variations include one that utilizes large flap-like seals (US-A-3,146,752) and several utilizing more flexible fabric type seals (US-A-3,140,687 and US-A-3,476,069). The most extreme variation appears to be described in US-A-3,473,503 which describes an attempt at an amphibious SES-type craft that has surface-contacting, flexible, vertical, side members. In any case, all of the aforementioned craft use flexible or flap-like seal members fore and aft, devote much usable hull space to the air chamber to allow wave clearance between the side members, and deviate widely in appearance from conventional marine craft. They also suffer from instability problems, particularly in small craft.

US-A-3,742,888 attempts to resolve admitted instability problems by incorporating discrete pressurized air chambers around the periphery of the hull. The theory is that as one of the high pressure peripheral chambers submerges, its pressure increases further while its opposite member loses pressure thereby causing a hull righting moment. In any case, this is an ungainly and assuredly rough riding craft that compromises the majority of useful hull space. It is primarily concerned with resolving instability problems related to the design which offers little resemblance to conventional marine craft and requires the high pressure peripheral chambers for any degree of stability. Continuous pressurization with this known design is essential, and deep draft at rest results.

One more approach is US-A-3,726,246 which describes a ram air inlet in the forward end of the hull that supplies air to a divergent channel under the hull. The divergent channel converts the dynamic energy (pressure) of the air to static pressure, according to Bernoulli's theorem, and thus increases lifting pressure. However in this application there is no aft sealing of the channel. As a result, little lift would be provided even if the forward ram air inlet were to be supplemented by artificial means.

Another approach that deviates far afield from more conventional aspects of marine design is given by US-A-3,702,598 which offers a tunnel hull with an aerodynamic lifting surface that receives ram air from a forward opening in the air chamber whose pressure can be supplemented by artificial means. This craft can only realize reasonable chamber lift values at very high speeds where ram air pressure is sufficient to maintain high chamber pressures. The tunnel hull bears little aesthetic resemblance to conventional marine craft.

There have also been attempts to inject air under hulls of more or less conventional form. Patents that exist in this area are US-A-3,547,064 and US-A-3,331,347. However the crafts described in these patents do not allow an air layer under the hull to be maintained at any lift-providing pressure since there is insufficient structure on the sides of the layer to do so.

There are also conventional hull forms that offer underwater cavities or tunnels of various types. Some of them include US-A-1,835,564, US-A-3,937,173, US-A-3,477,400, US-A-2,234,899 and US-A-2,231,296. None of these patents shows a pressurized restrained air or gas layer under the hull even though several show cavities in the hull of one type or another. They must be considered variations of more or less standard hull forms without benefit of a pressurized gas lifting force that is confined by structure.

The present invention aims to provide a boat hull that offers significant load carrying, efficiency, and ride improvements over conventional hulls while enabling the above-water aesthetics and handling characteristics of conventional hull forms to be retained.

In accordance with the present invention, a boat hull of the kind referred to is characterised in that the recess is bounded along its sides by stabilizing, load-carrying, catamaran-like sidehulls and in that the aft gas sealing means has at least one aft bow-shaped member having at least one surface that forms an angle with a line perpendicular to a vertical plane containing a hull centreline.

When pressurized air or any other gas is supplied to the recess of a boat hull according to the invention, hull lift capabilities are augmented with resulting significant performance gains. Even if the pressurized gas supply is rendered wholly or partially inoperative or if the hull is operated in extremely rough seas where some decay of gas pressure in the recess on an average basis can be expected, this invention makes for a hull that will perform substantially as well as or better than a similarly loaded conventional hull. The result is a significant advantage over other attempts at pressurized air hull craft that would generally have to wallow along at low speeds under rough sea conditions. Therefore, the present invention provides a craft that is very resistant both to yaw, roll, or pitch instabilities at high speeds, or to wallowing at low speeds, with the gas supply either "on" or "off", and regardless of sea roughness.

Test results utilizing a 12.8 m (42 foot) craft having a recessed hull for trapping and restraining a pressurized gas layer beneath the hull show the viability of such a design. In particular the test craft, a 12.8 m by 4.6 m (42 foot by 15 foot) welded aluminium craft, achieved in actual practice substantial efficiency improvements as compared to more conventional hull forms. Based on the test results, it can be said that, in moderate and heavy load carrying applications, these more conventional hulls will generally require from fifty to one hundred percent more power at planing speeds than a boat hull according to the invention. Additionally, there is normally at least a thirty percent speed advantage. These performance advantages are similar to those experienced by the complex and vastly more expensive SES described above.

In a particularly preferred embodiment of a boat hull according to the invention, the sidehulls extend downwardly and rearwardly from a front portion of the hull and have keels which diverge rearwardly over at least a portion of their lengths proximal the recess.

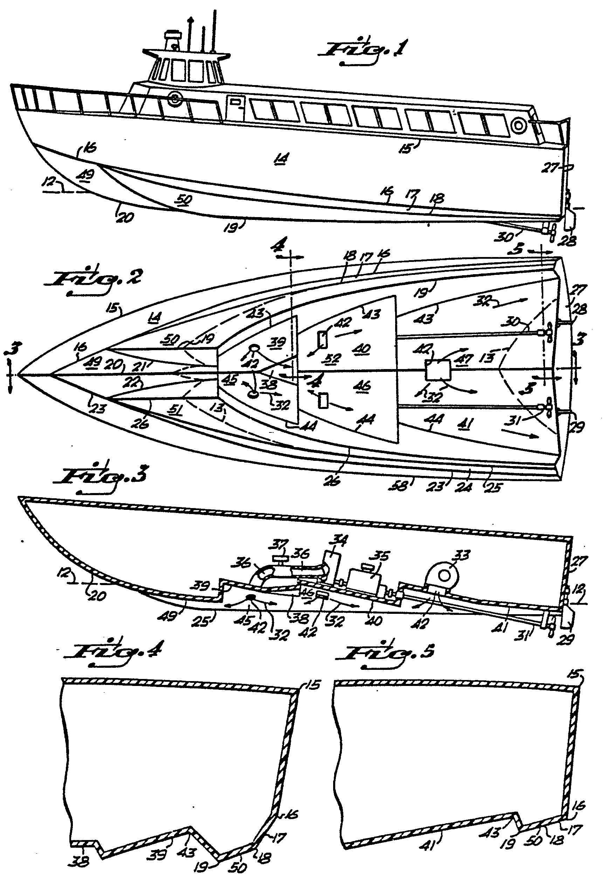

A boat hull having sidehulls with rearwardly diverging keels handles much like conventional hulls with the pressurized gas supply either "on" or "off", costs the same or only slightly more to manufacture and maintain than conventional hulls and offers generally the payload space, while maintaining essentially the same above water aesthetics as conventional hulls. As Figure 1 readily demonstrates, the inventive features of the present application are directed primarily to hulls of sufficient size to be utilized as work boats for commercial rather than for personal pleasure uses, although the principles cover such uses as well.

Tests have shown that the secondary bow-shaped members, while in some cases adding slightly to overall vehicle drag, provide excellent ride and tracking characteristics and improved gas retention means since the aft bow-shaped member, and optionally, any intermediate bow-shaped member if so designed, actually rides in the water like a small boat bow section.

The use of diverging keels on the catamaran sidehulls has proven to be very effective and valuable on test craft. As an example, on the 12.8 m test craft the catamaran sidehull keels are some 1.8 m (6 feet) apart at the forward end of the recess and 3.7 m (12 feet) apart aft. This means less gas flow leakage forward and narrower or finer entry forward which contribute to the exceptional ride qualities of these craft.

The catamaran sidehulls with diverging keels preferably employ non-trip chines to aid stability in turns. The 12.8 m test craft can negotiate a full 180° turn in less than a 61 m (200 foot) radius while travelling at an estimated 40 km/hr (25 mph). Banking characteristics in a turn are similar to a semi-V hull with the outboard chine higher than the inboard chine. The use of non-trip chines on the catamaran sidehulls contributes to these good handling characteristics.

Since the bottom line on any commercial venture is cost, it should be considered that a 33.5 m (110 foot) off-shore oil industry crew and supply boat built to a conventional design would cost, at today's prices, about 1.2 million U.S. dollars while a 33.5 m SES is in the four million U.S. dollar cost range. A 33.5 m vessel having a hull built according to the present invention and with rearwardly diverging sidehull keels would cost thirty percent more than the conventional hull or about 1.6 million U.S. dollars. However the higher speed and greater payload capability of the hull according to the present invention will pay back any of the cost difference between it and the conventional hull normally within the first year of operation.' The difference between the 4 million U.S. dollar cost of a 33.5 m SES and the 1.6 million U.S. dollars for a 33.5 m vessel having a hull built according to the present invention and with rearwardly diverging sidehull keels is enough to cover fixed operating expenses less depreciation of the present invention for over fifteen years.

The bow-shaped members not only act as gas flow restrictors but also add substantially to hull structural integrity and seaworthiness. In the design of the more desirable longer finer hull shapes it is advantageous to locate several bow-shaped members athwartships of, and interspaced down the length of, the recess that impact with the irregular water surface during rough sea operation. This maintains a series of gas chambers down the length of the hull, that may be interconnected and/or individually pressurized, and minimizes water impact with the underside of the rather shallow recess itself. The bow-shaped members are downwardly extending and may have any shape such as inverted-V, V, rounded, W, partially flat or the like, with the inverted-V being a preferred embodiment because of its simplicity of construction, inherently strong structural characteristics, and good ride qualities.

Additional bow-shaped members interspaced inside the recess are normally desirable, particularly toward the front portion of the recess, where they aid forward flow gas sealing. They can be used to create more than one recess, with the resultant benefit that partial or complete pressure loss in the forward recess or recesses is not noticeably experienced by the rearmost recesses even in a rough sea. The result is a significant reduction in partial recess repressurization time.

Optional gas passageways act as flow control orifices to ensure that the main gas supply recess reaches maximum pressure first in the event of pressure loss for any reason. Of course, it should be realised that any or all gas recesses can be individually pressurized if desired. It should also be realised that any intermediate bow-shaped members do not require water contact, at least during calm water operation.

A propulsor for the boat hull is preferably located as shown in the drawings (a sub-cavitating propeller in this instance) so that the wetted bow section adjacent to the propulsor ensures clean gas-free water to the propulsor since a gas layer does not exist directly above the propulsor as gas is directed to either side of the aft non-planar bow-shaped members. This concept also lends itself well to the installation of water jet propulsor inlets in the wetted portions of the non-planar bow-shaped members. In the case of multi-engine installations more than one aft bow-shaped member may be utilized in side by side arrangement if·desired. Of course, propulsors may be located under or adjacent to the catamaran sidehulls or below air surfaces. The latter requires deep submergence of propellers or structure to prevent air aspiration and is subject to the effects of turbulence and wave action.

The invention will now be described, by way of example, with reference to the accompanying drawings, in which:-

Figure 1 is a side view of a typical boat having a hull according to the invention showing the resemblance of the hull to more conventional hulls,

Figure 2 is a bottom view of the boat hull of the boat shown in Figure 1,

Figure 3 is a longitudinal centreline cross-section of the boat hull shown in Figures 1 and 2 and taken along line 3-3 of Figure 2,

Figure 4 is a transverse port side cross-section of the boat hull shown in Figures 1 to 3, and taken along line 4-4 of Figure 2,

Figure 5 is a transverse port side cross-section of the boat hull shown in Figures 1 to 3 and taken along the line 5-5 of Figure 2,

Figure 6 is a bottom view of an alternative embodiment of a boat hull according to the invention,

Figure 7 is a longitudinal centreline cross-section of the boat hull shown in Figure 6 and taken along line 7-7 of Figure 6,

Figure 8 is a transverse starboard side cross-section of the boat hull shown in Figures 6 and 7 and taken along line 8-8 of Figure 6,

Figure 9 is a transverse starboard side cross-section of the boat hull shown in Figures 6 and 7 and taken along line 9-9 of Figure 6,

Figure 10 is a transverse starboard side cross-section of the boat hull shown in Figures 6 and 7 and taken through the recess aft bow-shaped members and along line 10-10 of Figure 6, and

Figure 11 is a bottom view of part of a further alternative embodiment of a boat hull according to the invention.

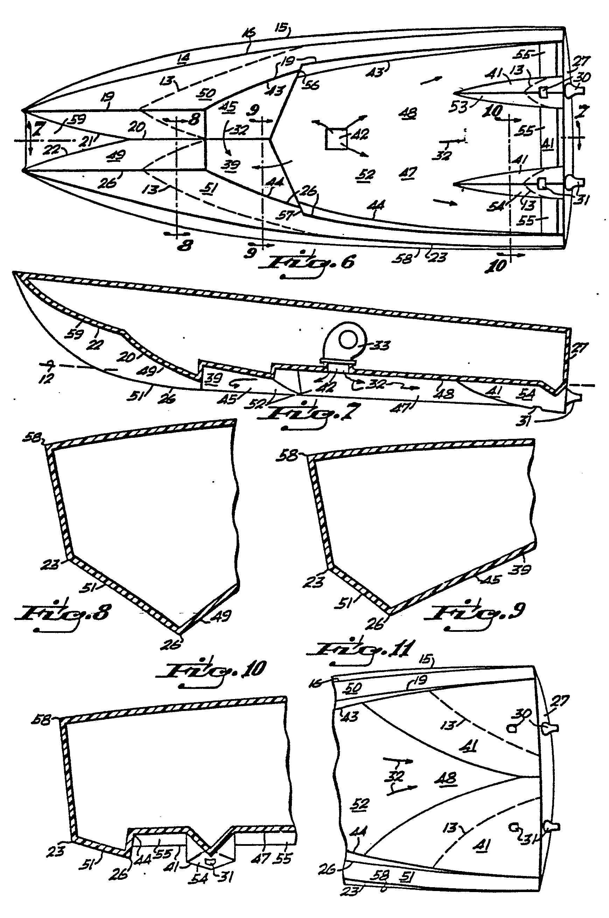

In Figure 1 there is shown a motorboat having one embodiment of a hull 14 according to the invention illustrating the above water resemblance to a conventional hull form. As can be seen in Figure 2, the hull 14 has a main recess 52 formed in its underside which is defined around its periphery by a forward bow-shaped member 49, a pair of spaced apart downwardly and rearwardly extending port and starboard side load-carrying catamaran-like stabilizing sidehulls 50 and 51, and an aft bow-shaped member 41 of V-form. The hull 14 has on its port and starboard sides sheer lines 15 and 58, respectively, outer chines 16 and 23, respectively, non-trip chines 17 and 24, respectively, inner chines 18 and 25, respectively, catamaran sidehull keels 19 and 26, respectively, propellers and shafts 30 and 31, respectively, and rudders 28 and 29, respectively. Other items shown include a main keel 20, a dynamic calm sea waterline 12 (shown in dashed lines), and a transom 27.

The aft bow-shaped member 41 need not be located at the transom 27 and the forward bow-shaped member 49 need not extend forward of the load-carrying catamaran-like sidehulls 50 and 51. The forward bow-shaped member 49 may assume any bow shape. In the embodiment shown in Figures 1 and 2 the member 49 has a standard V-shape at its forward end that becomes an inverted-W shape, as defined by catamaran keels 19 and 26 along with hull intersect lines 21 and 22 and main keel 20, at the front of the main recess 52. Incidentally, hull intersect lines 21 and 22 illustrate the downwardly extending nature of the catamaran sidehulls from front to back of the hull. The main recess 52 thus defined is purged of water by gas supplied through a gas supply duct or ducts 42 resulting in substantial performance improvements while underway. The hull lift-augmenting force realized from the gas in the main recess 52 improves hull ride quality and efficiency. Gas flow arrows 32 show the general direction of recess gas flow and the hull waterline 13 outlines the wetted hull area during·dynamic calm sea operation.

The main recess 52 may be separated into two or more smaller recesses. In the embodiment shown the recess 52 is separated into smaller recesses 45, 46 and 47 by secondary bow-shaped members 39 and 40. Gas is supplied to each smaller recess individually through gas supply ducts 42 or discharged at only one or two locations in main recess 52. In the latter case the use of gas passageways (such as 38) in a secondary bow-shaped member (such as 39) may be necessary for proper gas distribution throughout the main recess 52. Although only two secondary bow-shaped members 39 and 40 are shown in the main recess 52 any number, including none, may be used. Secondary bow-shaped members are generally considered essential for the most desirable long fine hull shapes when in rough seas to maintain proper gas pressures in the main recess 52 and to add to vessel stability. The secondary bow-shaped members 39 and 40 and aft bow-shaped member 41 need not span the full width of the main recess 52 as it is sometimes desirable to have gas flow area on the sides or other portions of those bow-shaped members 39, 40 and 41.

It has been found to be extremely advantageous to have the catamaran sidehull keels 19 and 26 diverge for at least a portion of their length thus providing a finer or narrower entry forward giving best rough sea ride qualities and less gas leakage in a forward direction. Ideally, as demonstrated on a 12.8 m test boat, the hull catamaran keels 19 and 26 diverge rearwardly proximal the recess 52 by at least 20 _percent_ of the distance therebetween at their forward portions. For example the keels 19 and 26 are half as far apart forward as they are apart at transom 27. It is also possible to have the catamaran keels 19 and 26 converge slightly aft to aid in gas flow sealing if desired although this is not shown.

Other desirable features of the hull include at least one non-trip chine 17 and 24 on each catamaran sidehull 50 and 51 to aid stability in turns. The 12.8 m test hull incorporates this type of non-trip chine and as a result is extremely manoeuvrable at speed with no tendency to roll or trip in turns. Other concepts such as spray deflection strips at the chine and rounded catamaran sidehull shapes for smoothest ride rather than hard chine are also feasible, although they are not shown in the drawings.

In Figure 3 can be seen the forward bow-shaped member 49, secondary bow-shaped members 39 and 40 and aft bow-shaped member 41 which together with the starboard catamaran sidehull 51 and starboard sidehull keel 26 define the underhull main recess 52 which is made up of smaller recesses 45, 46 and 47. Each of these recesses is relatively shallow in order to use little of the main hull 14 internal space, to allow rapid repressurization time in the event of partial or full loss of gas pressure in rough sea operation, and to have minimum draft requirements when the hull is quiescent with the gas supply off.

Also shown in Figure 3 are typical gas supply sources, in this case blowers 33 and 34, gas discharge duct outlets 42, and a separate pressure pickup duct 36 and pressure control means 37 used to pressurize the forward recess 45. The use of pressure control means 37 allows variation of pressure in any particular recess where a pressure control means 37 is incorporated in a gas supply duct 36. The advantage of this slightly more complicated approach is to allow hull trim control through variation of pressures in individual recesses. Hull trim control can also be accomplished by use of independently controlled drive means on blowers or other gas supply means as connected to different recesses. Blower 34 can be driven by power takeoff from a prime mover engine 35 or independent power means, not shown, as used on blower 33. The prime mover engine 35 typically drives the propeller and shaft assembly 31 with steering provided by the rudder 29 although any propulsor means, including air propulsors, can be applied to the hull.

A transverse port side cross-section of the boat hull is shown in Figure 4, with the non-trip chine 17 being defined by the inner chine 18 and the outer chine 16 and the keel 19 being normally the lowest portion of the sidehull 50. It is also possible to place narrow runners, not shown, at or near the keel 19 to aid gas sealing and directional stability, however tests conducted on the 12.8 m test hull show that additional side sealing capability is not necessary even in rough sea operation. Intersection of the secondary bow-shaped member 39 and the hull is noted at 43 and a gas flow passage 38 in the secondary bow-shaped member 39 is also shown.

As can be seen in Figure 5, the inner chine 18 and non-trip chine 17 are blended into the hull lines at this aft section. Also shown are the recess aft bow-shaped member 41, bow-shaped member hull intersect line 43, and port sheer line 15.

In Figure 6 there is shown an alternative version of a hull 14 according to the invention. Where possible parts of the hull which correspond with similar parts of the hull shown in Figures 1 to 6 have been designated with similar reference numerals. Referring to Figure 6, the hull 14 has an inverted-V shape bow-shaped member 49 forward of the main recess 52 that intersects at the main keel 20. The optional secondary bow-shaped member 39 shown is also of inverted-V shape which offers a gas trapping cushioned ride effect during wave impact. The forward inverted-V shape bow-shaped member is defined by hull intersect lines 21 and 22 along with cross member 59 and catamaran keels 19 and 26 at its most forward position where it more resembles an inverted-U shape and is defined by catamaran keels 19 and 26 and main keel 20 at its intersection with the main recess 52 although other modifications to this bow configuration are feasible and considered within the scope of the invention. The aft bow member 41 is made up of small bow-shaped members 53 and 54 which house optional waterjet propulsors 30 and 31 that are interconnected by downwardly extending gas sealing members 55 in this instance. Waterjet propulsor 30 and 31 steering and reversing mechanisms are now shown to simplify the drawings.

The catamaran keels 19 and 26 diverge for at least a portion of their length and may further diverge in steps 56 and 57 or other irregular or discontinuous fashion as occurs between the forward recess 45 and aft recess 47 in Figure 6. Use of more than one step 56 and 57 along the length of catamaran keels 19 and 26 for divergence is also feasible. Ideally the keels 19 and 26 should diverge rearwardly by at least 20% of the distance therebetween at their forward portions. The use of narrow hull entry shapes forward, as made possible by diverging catamaran sidehull keels 19 and 26, results in movement of the centre of lift of the hull aft and more over the main gas recess 52 with corresponding better ride qualities as has been proven on the 12.8 m test hull.

Pressurized gas is supplied through duct outlet 42 in the floor 48 of the aft recess 47. The recess gas flow arrows 32 show how the gas also flows to the forward recess 39 thus providing a large gas area over the entire surface of the main recess 52. The main recess 52 is defined at its periphery by load-carrying catamaran sidehulls 50 and 51 diverging keels 19 and 26, forward bow-shaped member 49, and aft bow member 41. Hull 14 water contact surfaces, during dynamic calm water operation, are illustrated by hull waterlines 13 (shown in dashed lines). Intersection with the aft recess floor 48 is shown by hull intersect lines 43 and 44.

As can be seen in Figure 7, the main recess 52 is made up of forward recess 45 and aft recess 47 and is typically supplied with gas by gas pressurizing devices, such as blower 33 through duct port 42. The inlet portion of waterjet propulsor 31 is well submerged thus providing gas free water to the waterjet propulsor 31.

Figures 8 to 10 show various transverse starboard side cross-sections along the boat hull. In Figure 8 the centre inverted-V bow-shaped section 49 is shown intersecting the catamaran sidehull keel 26 for simplicity of construction and for inherently strong structural shape where the inverted-V design provides good air trapping ride cushioning effect during rough sea operation. Also shown are the starboard side outer chine 23 and sheer 58.

In Figure 9 there is shown the forward recess 45 and the inverted-V secondary bow-shaped member 39. The inverted-V secondary bow-shaped member 39 may, if desired, intersect keel 26 of starboard catamaran hull 51.

The use of a secondary bow-shaped member 39 in close proximity to the front of the main recess 52 greatly aids forward gas flow sealing during rough sea operation.

In Figure 10 there is shown the aft recess 47 and the aft bow member 41 including one of the bow-shaped members 54. Also shown are gas flow resisting downward sloping sections 55 of aft bow member 41, waterjet inlet 31, catamaran sidehull 51 and keel 26, outer chine 23, and sheer 58.

A yet further embodiment of a hull according to the invention is shown in Figure 11, the hull having an inverted-V aft bow-shaped member 41 with hull dynamic calm sea waterline 13 (shown in dashed lines), waterjet propulsors 30 and 31, a main recess 52, a recess floor 48, gas flow arrows 32, catamaran sidehulls 50 and 51, diverging keels 19 and 26, a transom 27, and hull intersect lines 43 and 44. The inverted-V bow shape, as used for the aft bow member 41 here, is very desirable for both aft and inside the recess secondary bow-shaped members because of its simplicity of construction, inherently strong structural shape, and gas cushioning ride effect. However, other shapes including partially flat, round, or combinations can be used for secondary and aft bow-shaped members and are considered within the scope of this invention.

In all the embodiments of boat hull described herein the aft bow member or bow-shaped member 41 includes at least one surface that forms an angle, preferably exceeding five degrees, with a line perpendicular to a vertical plane containing the hull centreline.

CLAIMS

1. A boat hull (14) including a recess (52) in an underside of the hull, at least one bow-shaped member (49) proximal to a forward portion of the recess (52), gas inlet means (36, 37, 42) for supplying the recess (52) with pressurized gas from powered gas supply means (33,34), and substantially rigid aft gas sealing means(41) extending over at least a major part of the recess width, characterised in that the recess (52) is bounded along its sides by stabilizing, load-carrying, catamaran-like sidehulls (50, 51) and in that the aft gas sealing means (41) has at least one aft bow-shaped member (41) having at least one surface that forms an angle with a line perpendicular to a vertical plane containing a hull centreline.

2. A boat hull according to claim 1, characterised in that the said sidehulls (50, 51) extend downwardly and rearwardly from a front portion of the hull (14).

3. A boat hull according to claim 1 or 2, characterised in that the said sidehulls (50, 51) have keels (19, 26) which diverge rearwardly over at least a portion of their lengths proximal the recess (52).

4. A boat hull according to claim 3, characterised in that the said keels (19, 26) diverge rearwardly proximal the recess (52) by at least 20 percent of the distance therebetween at their forward portions.

5. A boat hull according to claim 3 or 4, characterised in that the said keels (19, 26) diverge rearwardly in a discontinuous manner.

6. A boat hull according to any of the preceding claims, characterised in that the aft bow-shaped member (41) is made up of at least one curvilinear surface.

7. A boat hull according to any of the preceding claims, characterised in that each of the said sidehulls (50, 51) includes at least one non-trip chine (17, 24).

8. A boat hull according to any of the preceding claims, characterised by at least one additional bow-shaped member (39, 40) athwartships of the recess (52).

9. A boat hull according to claim 8, characterised in that the gas inlet means (36, 37, 42) are arranged to supply pressurized gas from the gas supply means (33, 34) to different portions of the recess 52.

10. A boat hull according to claim 8 or 9, characterised in that said gas inlet means (36, 37, 42) open into the, or at least one of the, said at least one additional bow-shaped members (39, 40).

11. A boat hull according to any of the preceding claims, characterised in that the said at least one aft bow-shaped member (41) is of substantially inverted-V form.

12. A boat hull according to any of the preceding claims, characterised in that the said bow-shaped member (49) proximal to the said forward portion of the recess (52) is of inverted-V form defined by the intersection of forward portions of the said sidehulls (50, 51).

13. A marine surface vessel characterised in that it is provided with a boat hull according to any of the preceding claims.

14. A boat hull (14) that is partially supported by a pressurized gas lifting surface including a recess (52) in an underside of the hull (14), which recess is supplied with pressurized gas from a powered gas supply source (33, 34), and at least one bow member (49) proximal to a forward portion of the recess (52), <u>characterised in that</u> the hull (14) further includes stabilizing, load-carrying, catamaran-like sidehulls (50, 51) beginning and extending downward from the hull proximal to a forward portion thereof, which sidehulls (50, 51) have keels (19, 26) which diverge proximal the recess (52) by at least 20 <u>percent</u> of the distance therebetween at their forward portion, and at least one substantially rigid aft gas sealing bow member (41) extending over a major portion of the recess width, said aft bow member (41) including at least one surface with a line perpendicular to a vertical plane containing a hull centreline.

13. A boat hull according to any of the preceding claims, <u>characterised in that</u> the gas inlet means (36, 37, 42) comprises a duct (36) connecting said gas supply means (34) and the recess (52) and the pressure control means (37) for controlling the pressure of the gas supplied to the recess (52) via the duct (36).

14. A marine surface vessel <u>characterised in that</u> it is provided with a boat hull according to any of the preceding claims.

15. A boat hull (14) that is partially supported by a pressurized gas lifting surface including a recess (52) in an underside of the hull (14), which recess is supplied with pressurized gas from a powered gas supply source (33, 34), and at least one bow member (49) proximal to a forward portion of the recess (52), <u>characterised in that</u> the hull (14) further includes stabilizing, load-carrying, catamaran-like sidehulls (50, 51) beginning and extending downward from the hull proximal to a forward portion thereof, which sidehulls (50, 51) have keels (19, 26) which diverge proximal the recess (52) by at least 20 <u>percent</u> of the distance therebetween at their forward portion, and at least one substantially rigid aft gas sealing bow member (41) extending over a major portion of the recess width, said aft bow member (41) including at least one surface with a line perpendicular to a vertical plane containing a hull centreline.

16. A boat hull according to claim 15, <u>characterised</u> <u>by</u> a duct (36) connecting said gas supply source (34) and the recess (52) and pressure control means (37) for controlling the pressure of the gas supplied to the recess (52) via the duct (36).

0102424

1/2

Fig.1

Fig.2

Fig.3

Fig.4

Fig.5

Fig. 6

Fig. 7

Fig. 8

Fig. 9

Fig. 10

Fig. 11

0102424

European Patent
Office

EUROPEAN SEARCH REPORT

Application number

EP 82 30 4640

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| X | GB-A-1 597 461 (P.F.R. CORSON) <br><br> * Page 2, lines 13-130; figures 1-8 * | 1,2,3, 6,9,12 ,13,14 | B 63 B 1/38 |
| X | FR-A-2 408 506 (VAN DER GIESSEN-DE NOORD N.V.) <br> * Page 3, lines 20-40; page 4; figures 1-5 * | 1,6 | |
| A | FR-A-2 073 489 (W. BODEN) <br> * Page 8, lines 9-19; figure 2 * | 5 | |
| A | US-A-3 871 317 (J.J. SZPYTMAN) <br><br> * Column 2, lines 29-54; figures 1-3 * | 1,8,9, 10 | |
| A | US-A-3 902 445 (L.D. STOLK) <br><br> * Column 1, lines 57-68; column 2, lines 1-41; figures 1-11 * | 1,2,8, 9,10, 12 | TECHNICAL FIELDS SEARCHED (Int. Cl. ³) <br><br> B 63 B |
| A | FR-A-1 603 211 (A.J.G. BAUDOU) <br> * Page 2, lines 40-44; figure 4 * | 11 | |

The present search report has been drawn up for all claims

| Place of search | Date of completion of the search | Examiner |
|---|---|---|
| THE HAGUE | 29-04-1983 | PRUSSEN J.R. |